# EUROPEAN PATENT SPECIFICATION

(11) **EP 2 982 233 B1**
(45) Date of publication and mention of the grant of the patent: **28.12.2016**
(21) Application number: 15386023.4
(22) Date of filing: 29.07.2015
(51) Int. Cl.: A01D 46/26

(54) **FRUIT HARVESTING BEATING MACHINE HEAD**
SCHLAGENDER MASCHINENKOPF ZUR OBSTERNTE
TÊTE DE MACHINE DE RÉCOLTE PAR GAULAGE DE FRUIT

(30) Priority: 04.08.2014 GR 20140100418
(43) Date of publication of application: 10.02.2016
(73) Proprietor: Arvanitakis, Eleftherios, 71601 N. Alikarnassos, Iraklion (GR)
(72) Inventor: Arvanitakis, Eleftherios, 71601 N. Alikarnassos, Iraklion (GR)
(74) Representative: Papaconstantinou, Helen

(56) References cited:
- EP-A1- 1 862 059
- EP-A1- 2 705 743
- EP-A2- 1 749 435
- GR-B- 1 005 783

## Description

The present invention relates to a beating machine head, for example, to a head for an olive-tree beating machine.

The head of a fruit harvesting beating machine, e.g. of an olive-tree beating machine, is the main component of the fruit harvesting beating machines. The head is the last part of the fruit harvesting beating machine, which beats the tree forcing the fruit to drop, and includes a bar bearer that carries bars.

The motion of the head of the fruit harvesting beating machines may be achieved in various ways, while - independently of the type of motion that is used - the material that the head is made of plays an important role in the efficiency of the beating machine, the protection of the tree against damage, and the ease of handling by the man who operates it.

Some of the major known types of fruit harvesting heads and especially of olive-tree harvesting machines are the following:

### A) Combination of rigid bar bearer and rigid bars.

In these heads, the bar bearer and the bars are made of a rigid material, e.g. polymer, synthetic or metal. Typically, such a combination is used with bars larger than 25 cm, while the motion transmission to the head and therefore to the bars is translated as a reciprocating or elliptical motion by the drive. The rigid bars have high strength and may have a small diameter, typically 4-6 mm. The heads of this type have the advantage of high productivity as they carry greater forces on the tree. Their main disadvantage is that they exert high vibrations which are transferred to the machine operator in comparison to beating machine heads with flexible bars. Compared to flexible bars, the energy consumption is greater and in the case of power produced by a battery, the autonomy is smaller.

### B) Combination of rigid bar bearer and flexible bars.

In these heads, the bar bearer is made of a rigid material, e.g. polymer, synthetic or metal, and the bars are made of an elastic material. The flexible bars are very tree friendly and absorb the head vibrations generated during the motion transmission. Their main disadvantage is that they have lower efficiency than the heads with rigid bars, while their material wears out faster and requires replacement. Additionally, the elastic materials have a greater friction coefficient and stick on the branches so that movement through the branches of the tree becomes more difficult.

A beating machine for olive crop collection with such a head is known e.g. from document EP 1 749 435 A2.

### C) Bar bearer with bars forming a single unit.

These heads have bars that form a single unit altogether and are made of the same elastic material. Typically, they are manufactured by plastic moulding machines. Their manufacturing speed is high as no additional work is required for the mounting of the bars, because they are already embedded in the bar bearer. Their material wears out sooner than that of the rigid bars and when it needs to be replaced, the whole bar bearer is changed.

Also, there are flexible bar bearers with flexible bars.

The present invention aims to develop a fruit harvesting beating machine head which will provide high productivity, will cause minimal damage to the tree, will be easy to handle, will transmit a minimal amount of vibrations to the machine operator, and will consume low energy.

These are achieved by a fruit harvesting beating machine head, which has a bar bearer with flexible projections with holes that are interposed between the bar bearer and the bars, and in which bars are fixed made of a material harder than that of the bar bearer and the flexible projections. The material of the bar bearer is preferably the same as the material of the flexible projections, so that the manufacturing process becomes simplified. The material of the bars is preferably rigid.

The rigid material of the bars ensures greater productivity as the blow is transferred directly to the tree, while this blow is friendlier to the olive tree during the operation of the beating machine due to the elasticity of the projections of the bar bearer. Also, the flexible projections of the bar bearer absorb the vibrations generated on the bars so they are not transmitted to the shaft held by the operator. Thus, being able to work longer without getting tired. Another advantage is the low energy consumption due to the elasticity that is imparted to the bar bearer/bars system by the projections made of elastic material. Therefore, when the machine is powered by a battery, the autonomy is greater.

The use of rigid bars allows the use of bars with a small diameter, e.g. from 3 to 10 mm. The small diameter provides a significant advantage over the flexible bars as it allows the operator to move the head through the branches of the tree with greater ease due to the smaller resistance occurred.

The material of the bars may be polymer, synthetic or metal. It is also possible that synthetic materials like carbon fibres or fibre-reinforced plastic can be used for the bars, whereby the weight of the head is significantly lighter and the handling easier for the operator. Materials with low friction coefficient (PTFE, HDPE) may also be used for the bars providing less resistance during the movement through the tree branches which results in easier handling operation and low energy consumption. The bars may also be made of aluminium resulting in greater service life compared to the synthetic or plastic ones.

The bar bearer and the projections may be made of thermoplastic polyurethane or elastomeric plastic or any material that is more flexible than the bars.

The flexible projections may be of a different material than that of the bar bearer, and adjusted in holes of the bar bearer.

The proposed beating machine head combines the advantages of flexible and rigid bars without their disadvantages. Preferably, the fruit harvesting beating machine head is an olive-tree beating machine head.

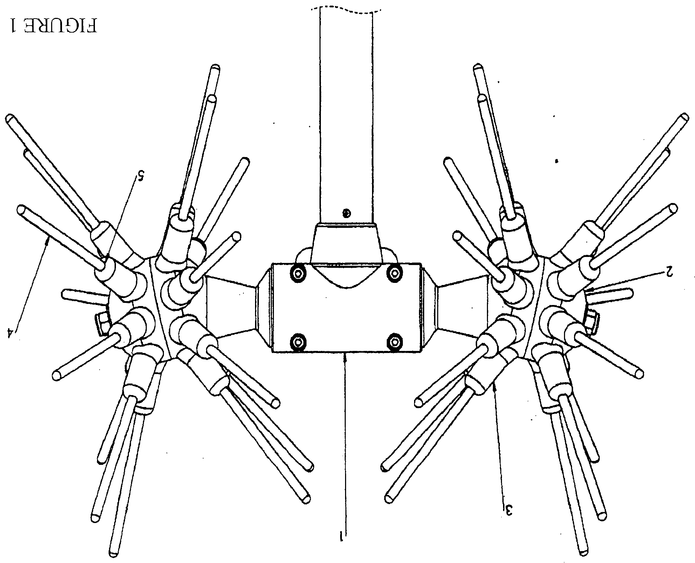

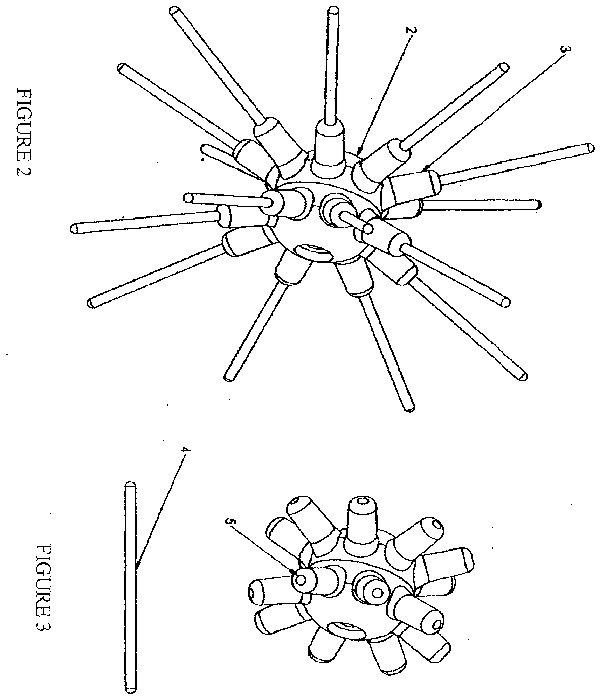

In Figures 1 and 2, a fruit harvesting beating machine head (1) is represented that comprises a bar bearer (2) having projections (3) of elastic material with holes (5), in which bars (4) of a rigid material are fixed. The holes (5) can been seen in figure 3.

The flexible projections preferably have a diameter of 3 to 25 mm and a length of 5 to 50 millimetres, and these dimensions may be larger or smaller depending on the elasticity of the bar bearer material and the length of the bars, the application, and the motion type of the beating machine.

Also, the bars can be pressed, screwed, glued or fastened by any suitable mechanical means.

The fabrication of the head may be made by plasticizing the bar bearer (2) with the projections (3) when that the bar bearer (2) and the projections (3) are of the same material. The holes (5) of the projections (3) of the bar bearer (2) may be made during the fabrication of the projections (3) in the mould phase using appropriate mechanisms. Also, the holes (5) may be made after the bar bearer (2) is cast with the projections (3) by machining processes.

## Claims

1. A fruit harvesting beating machine head (1) including a bar bearer (2) that carries bars (4), **characterized in that** the bar bearer (2) has flexible projections (3) with holes (5), that interposed between the bar bearer (2) and the bars (4), in which bars (4) are fixed made of a material harder than that of the bar bearer (2) and the flexible projections (3).

2. A fruit harvesting beating machine head (1) according to claim 1, **characterized in that** the material of the bars (4) is rigid.

3. A fruit harvesting beating machine head (1) according to claim 1 or 2, **characterized in that** the material of the bar bearer (2) is the same with that of the material of the flexible projections (3).

4. A fruit harvesting beating machine head (1) according to claim 1, 2 or 3, **characterized in that** the material of the bars (4) is polymer, synthetic or metal.

5. A fruit harvesting beating machine head (1) according to claim 1, 2, 3 or 4, **characterized in that** the material of the bars (4) is carbon fibres or fibre-reinforced plastic.

6. A fruit harvesting beating machine head (1) according to claim 1, 2, 3, 4 or 5, **characterized in that** the material of the bars (4) is a material with low friction coefficient (PTFE, HDPE) providing less resistance during the movement through the tree branches.

7. A fruit harvesting beating machine head (1) according to claim 1, 2, 3, 4, 5 or 6, **characterized in that** the material of the bar bearer (2) is thermoplastic polyurethane or elastomeric plastic or any material that is more elastic than the bars (4).

8. A fruit harvesting beating machine head (1) according to claim 1, 2, 3, 4, 5, 6 or 7, **characterized in that** it is an olive-tree beating machine head.

## Patentansprüche

1. Schlagender Maschinenkopf zur Obsternte (1), umfassend einen Stabträger (2), der Stäbe (4) trägt, **dadurch gekennzeichnet, dass** der Stabträger (2) flexible Vorsprünge (3) mit Löchern (5) aufweist, die zwischen dem Stabträger (2) und den Stäben (4) eingefügt sind, worin Stäbe (4) befestigt sind, welche aus einem härteren Material als dem des Stabträgers (2) und der flexiblen Vorsprüngen (3) bestehen.

2. Schlagender Maschinenkopf zur Obsternte (1) nach Anspruch 1, **dadurch gekennzeichnet, dass** das Material der Stäbe (4) starr ist.

3. Schlagender Maschinenkopf zur Obsternte (1) nach Anspruch 1 oder 2, **dadurch gekennzeichnet, dass** das Material des Stabträgers (2) das gleiche wie das des Materials der flexiblen Vorsprünge (3) ist.

4. Schlagender Maschinenkopf zur Obsternte (1) nach Anspruch 1, 2 oder 3, **dadurch gekennzeichnet, dass** das Material der Stäbe (4) ein Polymer, Kunststoff oder Metall ist.

5. Schlagender Maschinenkopf zur Obsternte (1) nach Anspruch 1, 2, 3 oder 4, **dadurch gekennzeichnet, dass** das Material der Stäbe (4) Kohlenstofffasern oder faserverstärkter Kunststoff ist.

6. Schlagender Maschinenkopf zur Obsternte (1) nach Anspruch 1, 2, 3, 4 oder 5, **dadurch gekennzeichnet, dass** das Material der Stäbe (4) ein Material mit niedrigem Reibungskoeffizienten (PTFE, HDPE) ist, der einen geringeren Widerstand während der Bewegung durch die Baumzweige bietet.

7. Schlagender Maschinenkopf zur Obsternte (1) nach Anspruch 1, 2, 3, 4, 5 oder 6, **dadurch gekennzeichnet, dass** das Material des Stabträgers (2) ein thermoplastisches Polyurethan oder ein elastomerer Kunststoff oder ein beliebiges elastischeres als die Stäbe (4) Material ist.

8. Schlagender Maschinenkopf zur Obsternte (1) nach Anspruch 1, 2, 3, 4, 5, 6 oder 7, **dadurch gekennzeichnet, dass** es sich um einen schlagenden Maschinenkopf für Olivenbäume handelt.

## Revendications

1. Tête de machine de récolte par gaulage de fruit (1) comprenant un support de barres (2) portant des barres (4), **caractérisée en ce que** le support de barres (2) présente des saillies flexibles (3) avec des trous (5), interposées entre le support de barres (2) et les barres (4), dans lesquels les barres (4) sont fixées, constituées d' un matériau plus dur que celui du support de barres (2) et des saillies flexibles (3).

2. Tête de machine de récolte par gaulage de fruit (1) selon la revendication 1, **caractérisée en ce que** le matériau des barres (4) est rigide.

3. Tête de machine de récolte par gaulage de fruit (1) selon la revendication 1 ou 2, **caractérisée en ce que** le matériau du support de barres (2) est le même que celui des saillies flexibles (3).

4. Tête de machine de récolte par gaulage de fruit (1) selon la revendication 1, 2 ou 3, **caractérisée en ce que** le matériau des barres (4) est un polymère, synthétique ou métal.

5. Tête de machine de récolte par gaulage de fruit (1) selon la revendication 1, 2, 3 ou 4, **caractérisée en ce que** les barres (4) sont constituées de fibres de carbone ou de matière plastique renforcée par des fibres.

6. Tête de machine de récolte par gaulage de fruit (1) selon la revendication 1, 2, 3, 4 ou 5, **caractérisée en ce que** le matériau des barres (4) est un matériau à faible coefficient de frottement (PTFE, HDPE) offrant moins de résistance pendant le mouvement à travers les branches des arbres.

7. Tête de machine de récolte par gaulage de fruit (1) selon la revendication 1, 2, 3, 4, 5 ou 6, **caractérisée en ce que** le matériau du support de barres (2) est un polyuréthane thermoplastique ou une matière plastique élastomère ou tout autre matériau qui est plus souple que les barres (4).

8. Tête de machine de récolte par gaulage de fruit (1) selon la revendication 1, 2, 3, 4, 5, 6 ou 7, **caractérisée en ce qu'**elle est une tête de machine à gauler l'olivier.
